# EUROPEAN PATENT APPLICATION

(11) **EP 4 832 508 A1**
(43) Date of publication of application: **28.10.2026**
(21) Application number: 24907103.6
(22) Date of filing: 28.11.2024
(51) Int. Cl.: H04R 3/12, H04N 7/15, H04R 1/40, H04R 3/00

(54) **SPEAKER SYSTEM, SPEAKER, WIRELESS TERMINAL, AND PROGRAM**

(30) Priority: 21.12.2023 JP 2023215902
(71) Applicant: D&M Holdings Inc., Kawasaki-shi Kanagawa 210-8569 (JP)
(72) Inventor: MIURA Noriyuki, Kawasaki-shi, Kanagawa 210-8569 (JP)
(74) Representative: Mewburn Ellis LLP
(86) International application number: PCT/JP2024/042077
(87) International publication number: WO 2025/134716

(57) **Abstract**

[Problem] To provide a speaker suitable for a voice conference, listening to music, and the like in an environment where a third party is present in the surroundings. [Solution] A personal speaker 2 is arranged with a speaker surface 200 facing a direction in which sound beams 203 output from a plurality of directional speakers provided on the speaker surface 200 will be reflected by a ceiling 4, for example, and then reach a listening position of a user. A wireless terminal 3 collects, at the listening position of the user, the sound beams 203 output from the plurality of directional speakers provided on the speaker surface 200, detects a sound volume level of the sound beams, and turns off a directional speaker which is the output source of a sound beam 203 the detected sound volume level of which is less than a prescribed value. Due to this configuration, among the plurality of directional speakers provided on the speaker surface 200, a directional speaker which may cause sound leakage is turned off.

## Description

### Technical Field

The present invention relates to a speaker system suitable for a voice conference, listening to music, and the like in an environment in which a third party is present in surroundings.

### Background Art

In Patent Literature 1, there is disclosed a multi-participant video conference system. This video conference system includes a central distributor and a plurality of computers connected to the central distributor through a network.

For each computer, the central distributor mixes voice data sent from computers other than that computer to generate conference voice data, and transmits the generated conference voice data to that computer. Further, the central distributor combines image data sent from the respective computers to generate conference image data, and transmits the generated conference image data to each computer.

A camera, a microphone, a monitor, and a speaker are connected to each computer, and the computer transmits image data on a user obtained through photographing by the camera and voice data on the user obtained through sound collection by the microphone to the central distributor, receives conference image data and conference voice data from the central distributor, and outputs the conference image data and the conference voice data from the monitor and the speaker, respectively.

Thus, a plurality of geographically separated users (conference participants) can hold a conference with a feeling as if those users are in the same place, while viewing video images of the respective users displayed on computers.

### Citation List

### Patent Literature

[PTL 1] JP 2015-228669 A

### Summary of Invention

### Technical Problem

In the video conference system as described in Patent Literature 1, for example, when a user participates in a video conference from the desk of the user in an office, the user may not wish people nearby, such as those at adjacent desks, to hear conference voice. However, when a volume is decreased so as to prevent the conference voice from being heard by the people nearby, the conference voice becomes more difficult to hear, and the conference may be hindered, for example, by the user missing speech of a conference participant.

It is also conceivable to use earphones or headphones instead of a speaker, but the user may feel it burdensome to wear the earphones or the headphones for a long time. For that reason, the use of earphones or headphones is not suitable for a video conference held for a long time.

This problem similarly occurs even when the user wishes to personally listen to music without being heard by people nearby, such as those at adjacent desks, in a space also used by another person, such as a cafe.

The present invention has been made in view of the above-mentioned circumstances, and an object thereof is to provide a speaker system suitable for a voice conference, listening to music, and the like in an environment in which a third party is present in surroundings.

### Solution to Problem

In order to solve the above-mentioned problem, the present invention achieves the following functions with a speaker and a wireless terminal that functions as a controller for the speaker.

The speaker includes a plurality of directional speakers arranged in an array on a speaker surface, and is arranged with the speaker surface facing in a direction in which sound beams output from the plurality of directional speakers are reflected by a surrounding object (ceiling or the like) to reach a listening position of a user.

The wireless terminal collects, at the listening position of the user, sound beams respectively output from the plurality of directional speakers, and detects volume levels of the sound beams. For example, the wireless terminal causes the plurality of directional speakers to output sound beams having different frequencies, and detects, for each of the frequencies of the sound beams, volume levels of sound collection signals obtained through sound collection at the listening position of the user, to thereby detect the volume levels of the sound beams respectively output from the plurality of directional speakers. In another case, the wireless terminal sequentially collects the sound beams at the listening position of the user while causing the plurality of directional speakers to sequentially output the sound beams, and detects the volume levels of the sound collection signals, to thereby detect the volume levels of the sound beams respectively output from the plurality of directional speakers. Then, the wireless terminal turns off a directional speaker that is an output source of a sound beam having a detected volume level lower than a predetermined value.

In another case, at a position around the listening position of the user, the wireless terminal collects sound beams respectively output from the plurality of directional speakers in the same manner as described above, and detects volume levels of the sound beams. Then, the wireless terminal turns off a directional speaker that is an output source of a sound beam having a detected volume level equal to or higher than a predetermined value.

For example, according to one aspect of the present invention, there is provided a speaker system including: a speaker; and a wireless terminal configured to function as a controller for the speaker, wherein the speaker includes: a plurality of directional speakers arranged in an array on a speaker surface; generation means for generating pieces of audio data having different frequencies for the respective plurality of directional speakers; output means for outputting the pieces of audio data generated by the generation means for the respective plurality of directional speakers from corresponding ones of the plurality of directional speakers in accordance with an instruction from the wireless terminal; and on/off means for controlling, for each of the plurality of directional speakers, on/off of the each of the plurality of directional speakers in accordance with an instruction from the wireless terminal, and wherein the wireless terminal includes: instruction means for instructing the speaker to output the pieces of audio data having different frequencies for the respective plurality of directional speakers; sound collection means for collecting sound of the pieces of audio data output from the plurality of directional speakers at different frequencies for the respective plurality of directional speakers; analysis means for analyzing volume levels of sound collection signals obtained through sound collection by the sound collection means for the respective frequencies of the pieces of audio data output from the plurality of directional speakers; and off instruction means for instructing the speaker to turn off one of the plurality of directional speakers that is an output source of one piece of audio data in which the volume level analyzed by the analysis means is lower than a predetermined value or equal to or higher than the predetermined value.

In addition, according to another aspect of the present invention, there is provided a speaker system including: a speaker; and a wireless terminal configured to function as a controller for the speaker, wherein the speaker includes: a plurality of directional speakers arranged in an array on a speaker surface; output means for outputting, from the plurality of directional speakers in a predetermined order, pieces of audio data input from outside or internally generated, in accordance with an instruction from the wireless terminal; and on/off means for controlling, for each of the plurality of directional speakers, on/off of the each of the plurality of directional speakers in accordance with an instruction from the wireless terminal, and wherein the wireless terminal includes: instruction means for instructing the speaker to output the pieces of audio data from the plurality of directional speakers in the predetermined order; sound collection means for collecting sound of the pieces of audio data output from the plurality of directional speakers in the predetermined order; analysis means for analyzing volume levels of sound collection signals of the respective pieces of audio data output from the plurality of directional speakers in the predetermined order and sequentially obtained through sound collection by the sound collection means; and off instruction means for instructing the speaker to turn off one of the plurality of directional speakers that is an output source of one piece of audio data in which the volume level analyzed by the analysis means is lower than a predetermined value or equal to or higher than the predetermined value.

### Advantageous Effects of Invention

In the present invention, the speaker is arranged with the speaker surface facing in a direction in which sound beams output from the plurality of directional speakers are reflected to reach the listening position of the user, and the wireless terminal collects, at the listening position of the user or a position around the listening position, the sound beams respectively output from the plurality of directional speakers, detects volume levels of the sound beams, and turns off a directional speaker that is an output source of a sound beam having a detected volume level lower than the predetermined value (when the wireless terminal is placed at the listening position of the user) or equal to or higher than the predetermined value (when the wireless terminal is placed at the position around the listening position of the user). In this manner, it is possible to turn off, among the plurality of directional speakers, a directional speaker that may cause sound leakage. Therefore, according to the present invention, it is possible to provide a speaker system suitable for a voice conference, listening to music, and the like in an environment in which a third party is present in surroundings.

### Brief Description of Drawings

FIG. 1 is a schematic configuration view of a video conference system in one embodiment of the present invention.
FIG. 2 is a schematic functional configuration diagram of a personal speaker (2).
FIG. 3(A), FIG. 3(B), FIG. 3(C), and FIG. 3(D) are a front view, a back view, a left side view, and a top view, respectively, of the personal speaker (2).
FIG. 4 is a schematic functional configuration diagram of a wireless terminal (3).
FIG. 5 is an explanatory flow chart for illustrating an operation of the wireless terminal (3).
FIG. 6 is a schematic functional configuration diagram of a personal speaker (2a), which is a modification example of the personal speaker (2).
FIG. 7 is a schematic functional configuration diagram of a wireless terminal (3a), which is a modification example of the wireless terminal (3).

### Description of Embodiments

Now, one embodiment of the present invention is described.

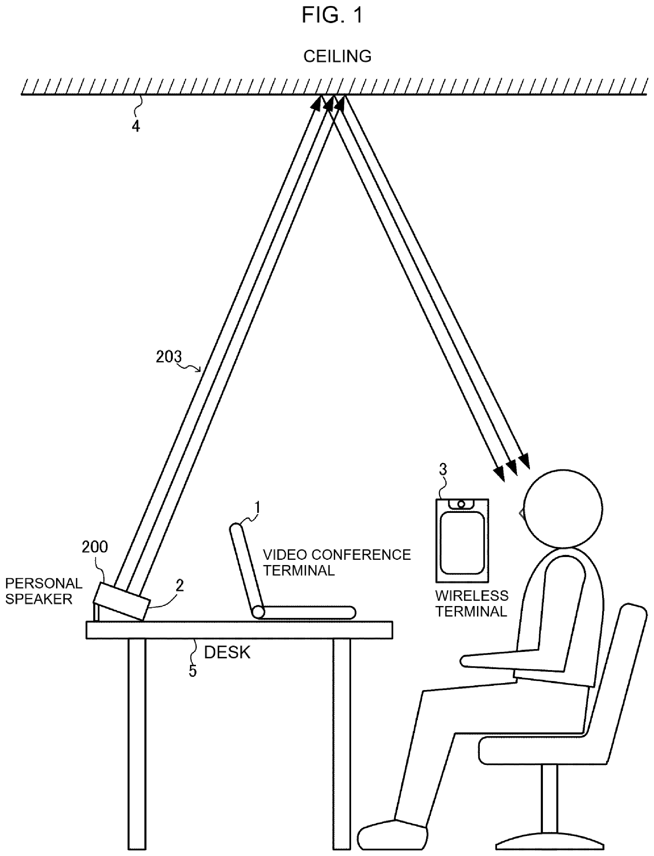

FIG. 1 is a schematic configuration view of a video conference system in this embodiment.

As illustrated in the figure, the video conference system in this embodiment includes a video conference terminal 1, a personal speaker 2, and a wireless terminal 3.

The video conference terminal 1 is a network terminal including a camera, a microphone, and a display, transmits image data on a user obtained through photographing by the camera and voice data on the user obtained through sound collection by the microphone to a video conference server (not shown) through a network, receives conference image data and conference voice data from the video conference server, and outputs the conference image data and the conference voice data from the monitor and the personal speaker 2, respectively. Thus, a plurality of geographically separated users (video conference participants) can hold a conference with a feeling as if those users are in the same place, while viewing video images of the respective users displayed on the video conference terminals 1.

The personal speaker 2 is wirelessly connected to the video conference terminal 1, and outputs the conference voice data received from the video conference terminal 1 from a speaker surface 200 as a highly directional sound beam 203. The personal speaker 2 includes an inclination adjustment mechanism 21 described later, and is placed, for example, on a desk 5 together with the video conference terminal 1, and an inclination of the speaker surface 200 is adjusted so that the sound beam 203 output from the speaker surface 200 is reflected by a ceiling 4 to reach a listening position of the user.

The wireless terminal 3 functions as a remote controller for the personal speaker 2.

Next, details of the personal speaker 2 and the wireless terminal 3 that form the video conference system in this embodiment are described.

As the video conference terminal 1, it is possible to use a personal computer (PC), a notebook PC, a tablet PC, or the like including a camera, a microphone, and a display such as a liquid crystal panel, and hence a detailed description thereof is omitted.

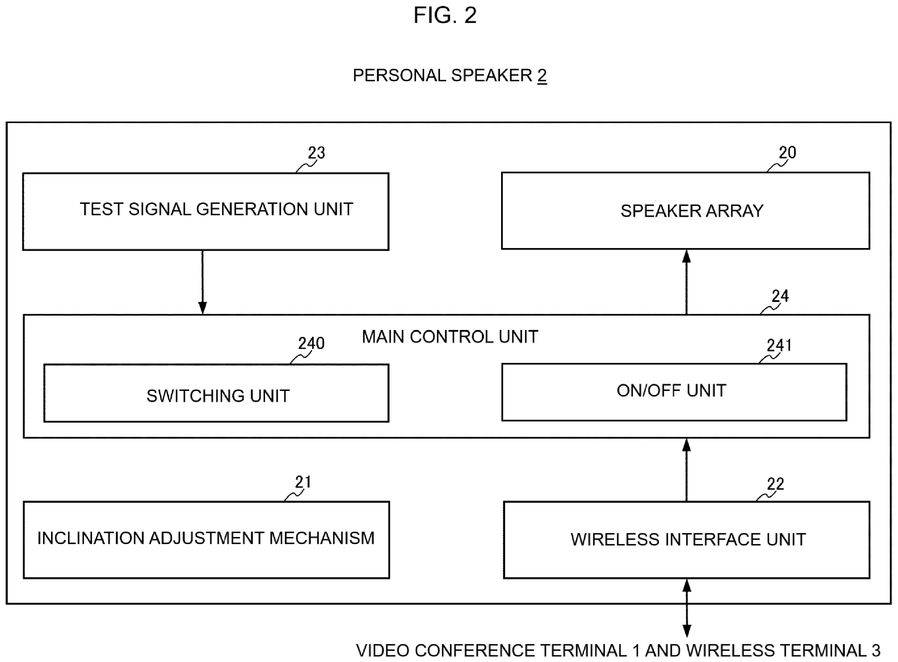

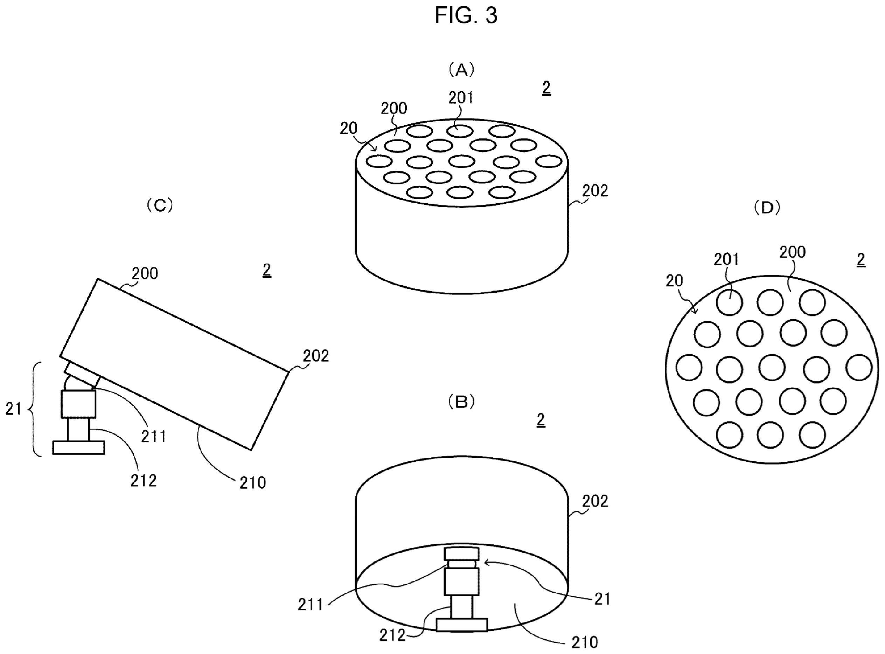

FIG. 2 is a schematic functional configuration diagram of the personal speaker 2. Further, FIG. 3(A), FIG. 3(B), FIG. 3(C), and FIG. 3(D) are a front view, a back view, a left side view, and a top view, respectively, of the personal speaker 2.

As illustrated in the figure, the personal speaker 2 includes a speaker array 20, the inclination adjustment mechanism 21, a wireless interface unit 22, a test signal generation unit 23, and a main control unit 24.

The speaker array 20 is formed of a plurality of directional speakers 201 arranged in an array on the speaker surface 200 formed as one surface of a housing 202. For example, a parametric speaker can be used as the speaker array 20.

The inclination adjustment mechanism 21 is a mechanism for adjusting the inclination (inclination angle with respect to the ceiling 4) of the speaker surface 200, and includes an adjuster bolt 212 having an adjustable height, and a ball joint 211, which couples an end portion of the adjuster bolt 212 to an edge portion of a back surface (surface opposite to the speaker surface 200) 210 of the housing 202, and which supports the housing 202 so that the housing 202 can swing relative to the adjuster bolt 212.

The wireless interface unit 22 is an interface for establishing wireless connection to the video conference terminal 1 and the wireless terminal 3 through a wireless local area network (LAN), Bluetooth (trademark), or the like.

The test signal generation unit 23 generates audio signals (hereinafter referred to as "test signals") having different frequencies for the respective directional speakers 201 that form the speaker array 20 at the same volume level.

The main control unit 24 collectively controls the speaker array 20, the wireless interface unit 22, and the test signal generation unit 23.

The main control unit 24 also includes a switching unit 240 and an on/off unit 241.

In a normal mode, the switching unit 240 connects the speaker array 20 so as to output the conference voice data sent from the video conference terminal 1 through the wireless interface unit 22. Then, when a test start instruction is received from the wireless terminal 3 through the wireless interface unit 22, the switching unit 240 shifts to a test mode, causes the test signal generation unit 23 to generate test signals having different frequencies for the respective directional speakers 201 that form the speaker array 20 at the same volume level, and switches connection of the speaker array 20 so as to output the test signals generated for the respective directional speakers 201 by the test signal generation unit 23 from the corresponding directional speakers 201. After that, when a test end instruction is received from the wireless terminal 3 through the wireless interface unit 22, the switching unit 240 returns to the above-mentioned normal mode.

In accordance with an off instruction received from the wireless terminal 3 through the wireless interface unit 22, the on/off unit 241 sets, among the directional speakers 201 that form the speaker array 20, the directional speaker 201 designated by the off instruction to an off state, and sets the other directional speakers 201 to an on state.

The functional configuration of the personal speaker 2 illustrated in FIG. 2 may be implemented by hardware through use of an integrated logic IC such as an application specific integrated circuit (ASIC) or a field programmable gate array (FPGA), or may be implemented by software through use of a computer such as a digital signal processor (DSP).

Next, details of the wireless terminal 3 are described.

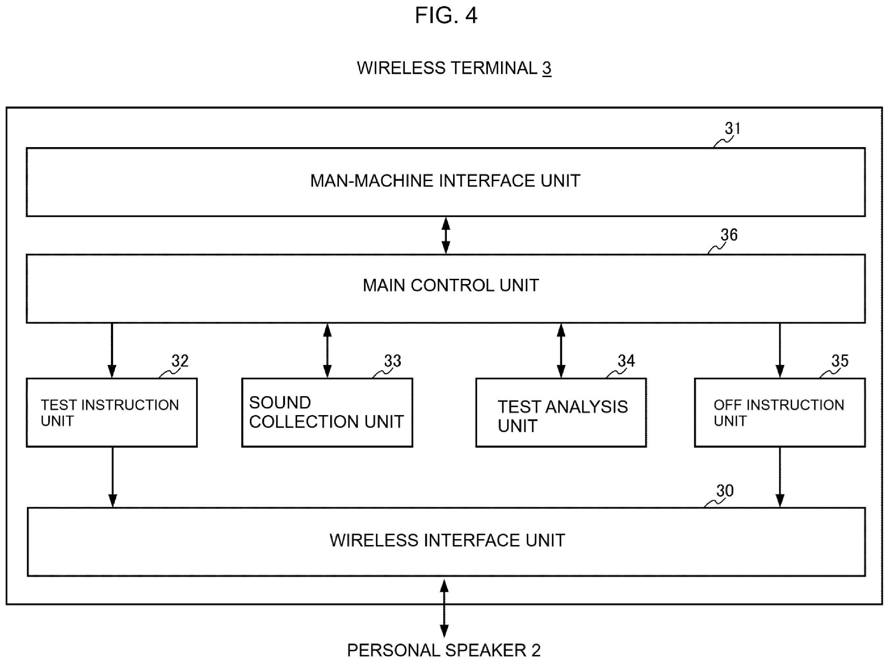

FIG. 4 is a schematic functional configuration diagram of the wireless terminal 3.

As illustrated in the figure, the wireless terminal 3 includes a wireless interface unit 30, a man-machine interface unit 31, a test instruction unit 32, a sound collection unit 33, a test analysis unit 34, an off instruction unit 35, and a main control unit 36.

The wireless interface unit 30 is an interface for establishing wireless communication to and from the personal speaker 2.

The man-machine interface unit 31 is an interface for displaying information to the user and for receiving various operations from the user, and includes an input/output device such as a display with a touch sensor.

In accordance with an instruction received from the user through the man-machine interface unit 31, the test instruction unit 32 transmits, to the personal speaker 2 through the wireless interface unit 30, the test start instruction for causing the personal speaker 2 to shift from the normal mode to the test mode, and the test end instruction for causing the personal speaker 2 to shift from the test mode to the normal mode.

The sound collection unit 33 collects the test signals output from the personal speaker 2 in the test mode with a built-in microphone or an externally attached microphone.

The test analysis unit 34 analyzes a sound collection signal of the sound collection unit 33, and detects the volume levels for the respective frequencies of the test signals output from the respective directional speakers 201 that form the speaker array 20. Further, the test analysis unit 34 stores a table in which, for each of the directional speakers 201 that form the speaker array 20, the frequency of the test signal output from this directional speaker 201 is registered. When a test signal having a volume level lower than a predetermined value is detected, the test analysis unit 34 identifies, based on this table, the directional speaker 201 associated with the frequency of the detected test signal as an output source of the test signal having a volume level lower than the predetermined value (directional speaker 201 that may be causing sound leakage), and determines this directional speaker 201 as a speaker to be turned off.

The off instruction unit 35 transmits the off instruction accompanied by designation of the speaker to be turned off, which has been determined by the test analysis unit 34, to the personal speaker 2 through the wireless interface unit 30.

The functional configuration of the wireless terminal 3 illustrated in FIG. 4 may be implemented by hardware through use of an integrated logic IC such as an ASIC or an FPGA, or may be implemented by software through use of a computer such as a DSP. As another example, the functional configuration is implemented as a process on a mobile computer, such as a smartphone or a tablet personal computer (PC), including a central processing unit (CPU), a memory, an auxiliary storage device such as a flash memory, and a short-range wireless communication device adapted to a wireless local area network (LAN), Bluetooth (trademark), or the like, by the CPU loading a predetermined program into the memory from the auxiliary storage device and executing the program.

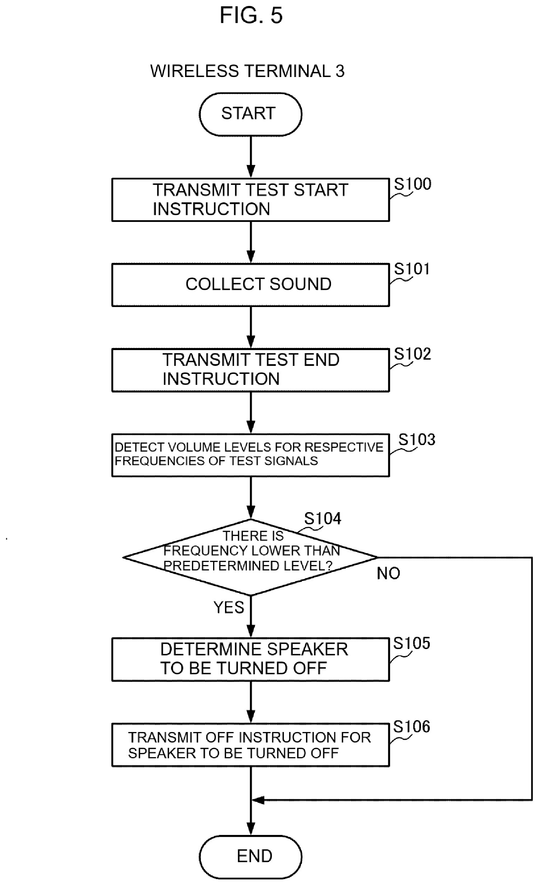

FIG. 5 is an explanatory flow chart for illustrating an operation (sound leakage prevention processing) of the wireless terminal 3.

This flow is started when the main control unit 36 receives, through the man-machine interface unit 31, an operation for shifting the personal speaker 2 to the test mode.

First, the main control unit 36 instructs the test instruction unit 32 to start a test. In response thereto, the test instruction unit 32 transmits the test start instruction to the personal speaker 2 through the wireless interface unit 30 (Step S100).

Thus, the personal speaker 2 shifts to the test mode, and outputs the test signals having different frequencies for the respective directional speakers 201 that form the speaker array 20 from the speaker surface 200 as sound beams 203. As described above, the personal speaker 2 is arranged with the speaker surface 200 facing the ceiling 4 so that the sound beams 203 output from the speaker surface 200 are reflected by the ceiling 4 to travel toward the listening position of the user.

Subsequently, the main control unit 36 instructs the sound collection unit 33 to collect sound. In response thereto, the sound collection unit 33 collects the sound beams 203 of the test signals output from the personal speaker 2 in the test mode with a built-in microphone or an externally attached microphone (Step S101).

Then, when a time (for example, 15 seconds) determined in advance as a time required for sound collection of the sound beams 203 of the test signals by the sound collection unit 33 has elapsed, the main control unit 36 instructs the test instruction unit 32 to end the test. In response thereto, the test instruction unit 32 transmits the test end instruction to the personal speaker 2 through the wireless interface unit 30 (Step S102).

Thus, the personal speaker 2 ends the output of the sound beams 203 of the test signals, shifts from the test mode to the normal mode, and starts output of conference voice data received from the video conference terminal 1.

Subsequently, the main control unit 36 passes the sound collection signal of the sound collection unit 33 to the test analysis unit 34. In response thereto, the test analysis unit 34 detects, through the sound collection signal of the sound collection unit 33, the volume levels for the respective frequencies of the test signals output from the respective directional speakers 201 that form the speaker array 20 (Step S103). Then, the test analysis unit 34 examines whether or not there is a test signal having a frequency at which the volume level is lower than a predetermined value (Step S104).

Here, when there is a test signal having a volume level lower than a predetermined value (YES in Step S104), it is considered that this test signal is not reflected toward the listening position of the user due to unevenness or the like of the ceiling 4, and is causing sound leakage to surroundings of this listening position. Therefore, in this case, the test analysis unit 34 refers to the table to identify the directional speaker 201 associated with the frequency of the test signal having a volume level lower than the predetermined value as the directional speaker 201 that is the output source of the sound beam 203 of this test signal. Then, the test analysis unit 34 determines this identified directional speaker 201 as the speaker to be turned off (Step S105). When a predetermined number or more of the directional speakers 201 are determined as speakers to be turned off, a message or the like for prompting adjustment of a position of the personal speaker 2 and the inclination of the speaker surface 200 may be output to the man-machine interface unit 31.

Then, the main control unit 36 notifies the off instruction unit 35 of the speaker to be turned off, which has been determined by the test analysis unit 34. In response thereto, the off instruction unit 35 transmits the off instruction accompanied by the designation of the speaker to be turned off to the personal speaker 2 through the wireless interface unit 30 (Step S106). After that, this flow is ended.

Thus, the personal speaker 2 switches the speaker to be turned off, which has been designated by the off instruction, to an off state.

In contrast, when the volume levels of the test signals of all the frequencies are equal to or higher than the predetermined value (NO in Step S104), this flow is immediately ended.

One embodiment of the present invention has been described above.

In this embodiment, the personal speaker 2 is arranged with the speaker surface 200 facing the ceiling 4 so that the sound beams 203 output from the plurality of directional speakers 201 are reflected by the ceiling 4 to reach the listening position of the user. The wireless terminal 3 collects, at the listening position of the user, the sound beams 203 respectively output from the plurality of directional speakers 201, detects volume levels of the sound beams 203, and sets, to an off state, the directional speaker 201 that is the output source of the sound beam 203 having a detected volume level lower than a predetermined value. In this manner, it is possible to turn off, among the plurality of directional speakers 201, the directional speaker 201 that outputs the sound beam 203 that is reflected by the ceiling 4 to travel toward a position other than the listening position of the user. Therefore, according to this embodiment, it is possible to provide a video conference system suitable for a voice conference in an environment in which a third party is present in surroundings.

Further, in this embodiment, the personal speaker 2 includes the inclination adjustment mechanism 21 for adjusting the inclination (inclination angle with respect to the ceiling 4) of the speaker surface 200, and hence it is possible to adjust the inclination of the speaker surface 200 so that the sound beam 203 output from the speaker surface 200 is reliably reflected by the ceiling 4 to reach the listening position of the user. For that reason, a degree of freedom in installation of the personal speaker 2 is increased, and convenience is improved.

The present invention is not limited to the above-mentioned embodiment, and various modifications can be made thereto within the gist thereof.

For example, in the above-mentioned embodiment, the personal speaker 2 outputs, from the speaker surface 200, the sound beams 203 of the test signals having different frequencies for the respective directional speakers 201 that form the speaker array 20. Then, the wireless terminal 3 detects volume levels of the sound beams 203 for the respective frequencies of the test signals output from the respective directional speakers 201 that form the speaker array 20, identifies the directional speaker 201 that is the output source of the sound beam 203 of the test signal having a volume level lower than a predetermined value, and determines this identified directional speaker 201 as the speaker to be turned off. However, the present invention is not limited thereto.

The personal speaker 2 may output the sound beams 203 of test signals having the same frequency from the plurality of directional speakers 201 that form the speaker array 20 in a predetermined order. Then, the wireless terminal 3 may detect volume levels of the sound beams 203 of the test signals output from the plurality of directional speakers 201 that form the speaker array 20 in the predetermined order, identify the directional speaker 201 that is the output source of the sound beam 203 of the test signal having a volume level lower than a predetermined value, and determine this identified directional speaker 201 as the speaker to be turned off.

Further, in the above-mentioned embodiment, the wireless terminal 3 executes the sound leakage prevention processing in accordance with the operation for shifting the personal speaker 2 to the test mode, but may execute the sound leakage prevention processing at a predetermined timing such as when the personal speaker 2 is activated.

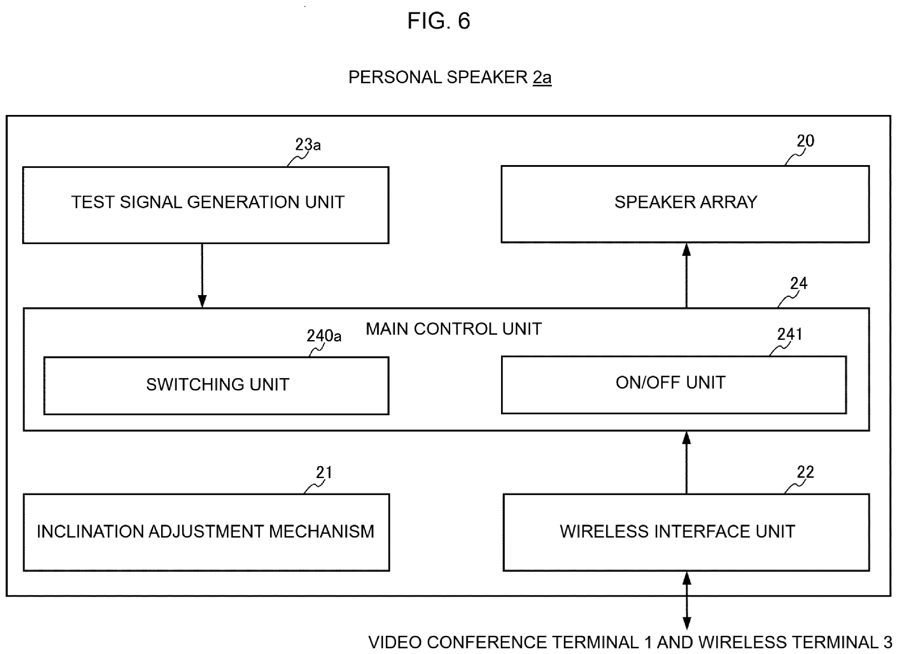

FIG. 6 is a schematic functional configuration diagram of a personal speaker 2a, which is a modification example of the personal speaker 2.

This personal speaker 2a is different from the personal speaker 2 illustrated in FIG. 2 in that a test signal generation unit 23a is used instead of the test signal generation unit 23 and that a switching unit 240a is used instead of the switching unit 240. The rest of the configuration is basically the same as that of the personal speaker 2.

The test signal generation unit 23a generates test signals having the same frequency for the plurality of directional speakers 201 that form the speaker array 20.

In a normal mode, the switching unit 240a connects the speaker array 20 so as to output the conference voice data sent from the video conference terminal 1 through the wireless interface unit 22. Then, when a test start instruction is received from the wireless terminal 3 through the wireless interface unit 22, the switching unit 240a shifts to a test mode, causes the test signal generation unit 23a to generate test signals having the same frequency for the plurality of directional speakers 201 that form the speaker array 20, and switches connection of the speaker array 20 so as to output the test signals generated by the test signal generation unit 23a from the plurality of directional speakers 201 in a predetermined order. After that, when a test end instruction is received from the wireless terminal 3 through the wireless interface unit 22, the switching unit 240a returns to the above-mentioned normal mode.

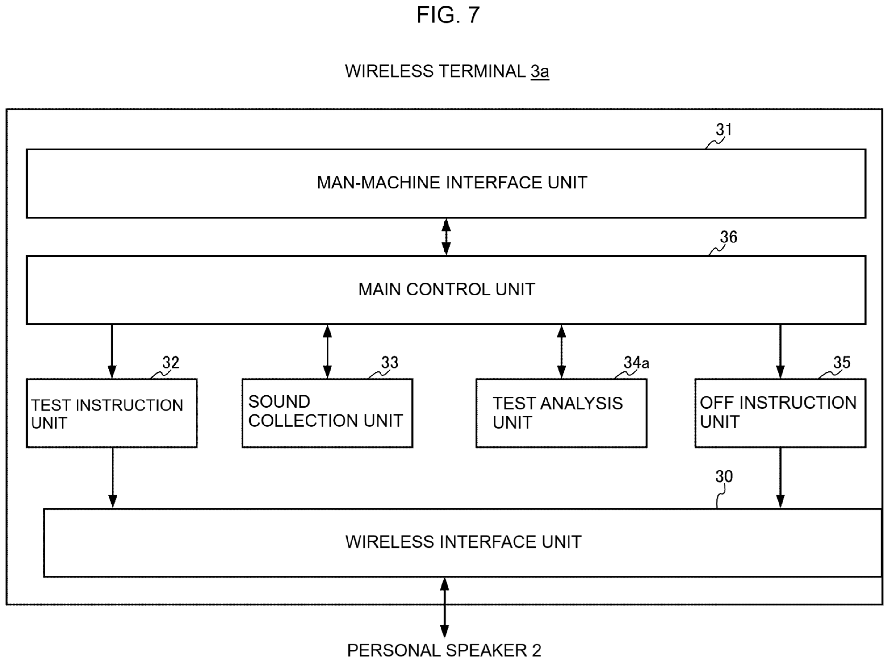

FIG. 7 is a schematic functional configuration diagram of a wireless terminal 3a, which is a modification example of the wireless terminal 3.

This wireless terminal 3a is different from the wireless terminal 3 illustrated in FIG. 4 in that a test analysis unit 34a is used instead of the test analysis unit 34. The rest of the configuration is basically the same as that of the wireless terminal 3.

The test analysis unit 34a detects the volume levels of the sound collection signals of the sound collection unit 33 for the respective sound beams 203 of the test signals sequentially output from the plurality of directional speakers 201 that form the speaker array 20. The test analysis unit 34a also stores a table in which positions of the test signals in an output order are registered for the respective directional speakers 201 that form the speaker array 20. When the sound beam 203 of the test signal having a volume level lower than a predetermined value is detected, the test analysis unit 34a identifies, based on this table, the directional speaker 201 associated with a position of this sound beam 203 in a detection order (position of the test signal in the output order) as the output source of the sound beam of the test signal having a volume level lower than the predetermined value, and determines this directional speaker 201 as the speaker to be turned off.

In this manner, even when the sound beams 203 of the test signals having the same frequency are sequentially collected at the listening position of the user while being output from the plurality of directional speakers 201 that form the speaker array 20 in a predetermined order, the volume levels of the respective sound beams 203 of the test signals are detected, and the directional speaker 201 that is the output source of the sound beam 203 of the test signal having a volume level lower than the predetermined value is determined as the speaker to be turned off, the same effects as those of the above-mentioned embodiment in which the test signals having mutually different frequencies are simultaneously output from the plurality of directional speakers 201 can be achieved.

Here, instead of the sound beams 203 of the test signals, it is also possible to sequentially detect the volume levels of the respective sound beams 203 of the conference voice data output from the plurality of directional speakers 201 in a predetermined order through sound collection at the listening position of the user while outputting the sound beams 203 of the conference voice data sent from the video conference terminal 1 from the plurality of directional speakers 201 in the predetermined order. Then, when the sound beam 203 of the conference voice data having a volume level lower than the predetermined value is detected, the directional speaker 201 that is the output source thereof is determined as the speaker to be turned off through use of the above-mentioned table, and hence it is possible to determine the speaker to be turned off while performing a voice conference.

Further, in the above-mentioned embodiment and the modification examples thereof, the wireless terminal 3 or 3a placed at the listening position of the user collects the sound beams 203 output from the respective plurality of directional speakers 201 that form the speaker array 20 of the personal speaker 2 or 2a, and detects the volume levels of the sound beams 203. However, the present invention is not limited thereto. For example, the wireless terminal 3 or 3a may be placed at a position other than the listening position of the user. Of the sound beams 203 output from the plurality of directional speakers 201, the sound beams 203 widely scattered due to unevenness or the like of the ceiling 4 are considered to be detected at a certain volume level at a position around the listening position of the user. Therefore, the wireless terminal 3 or 3a placed at the position around the listening position of the user may collect the sound beams 203 output from the respective plurality of directional speakers 201 of the personal speaker 2 or 2a, detect volume levels of the sound beams 203, and identify the output source of the sound beam 203 having a detected volume level equal to or higher than the predetermined value (directional speaker 201 that may be causing sound leakage) as the speaker to be turned off. Even in this manner, it is possible to turn off, among the plurality of directional speakers 201 that form the speaker array 20, the directional speaker 201 that outputs the sound beam 203 reflected by the ceiling 4 to travel toward a position other than the listening position of the user.

Further, in the above-mentioned embodiment and the modification examples thereof, the inclination adjustment mechanism 21 of the personal speaker 2 or 2a includes the adjuster bolt 212 and the ball joint 211 that couples the end portion of the adjuster bolt 212 to the edge portion of the back surface 210 of the housing 202. However, the present invention is not limited thereto. The inclination adjustment mechanism 21 may be any mechanism that can adjust the inclination (inclination angle with respect to the ceiling 4) of the speaker surface 200. For example, a hinge, a ratchet, or the like may be used instead of the ball joint 211. Further, a drive mechanism such as a motor for driving the inclination adjustment mechanism 21 may be provided to the personal speaker 2 or 2a, and the wireless terminal 3 or 3a may control the drive mechanism in accordance with an instruction from the user to adjust the inclination of the speaker surface 200. In another case, for example, after the speaker to be turned off is turned off, the wireless terminal 3 or 3a may control the drive mechanism to automatically adjust the inclination of the speaker surface 200 so that the inclination is optimized. For example, the wireless terminal 3 or 3a causes the test signals or the conference voice data to be output from the personal speaker 2 or 2a while changing the inclination of the speaker surface 200, collects sound at the listening position of the user or a position around the listening position, and detects the volume levels of the test signals or the conference voice data. Then, the wireless terminal 3 or 3a automatically adjusts the inclination of the speaker surface 200 so that the detected volume levels are maximized (when the wireless terminal 3 or 3a is placed at the listening position of the user) or minimized (when the wireless terminal 3 or 3a is placed at the position around the listening position of the user). In this manner, it is possible to automatically adjust the inclination of the speaker surface 200 of the personal speaker 2 or 2a to an optimal inclination angle at which less sound leakage is caused.

Further, in the above-mentioned embodiment and the modification examples thereof, when the directional speaker 201 that may be causing sound leakage is included among the plurality of directional speakers 201, this directional speaker 201 is switched to an off state, but when the directional speaker 201 is switched to an off state, an output volume level of other directional speakers 201 may be increased by a predetermined value. Thus, even when the number of directional speakers 201 in an on state varies, it is possible to suppress variation in a volume of combined sound. For that reason, for example, even when the number of directional speakers 201 in the on state varies through the above-mentioned processing during a voice conference or during listening to music, the user is not aware of a reduction in volume.

Further, in the above-mentioned embodiment and the modification examples thereof, the sound beams 203 output from the plurality of directional speakers are reflected by the ceiling 4, but may be reflected by a suitable surface other than the ceiling 4 present in an indoor or outdoor space in which the personal speaker 2 or 2a is placed.

Further, in the above-mentioned embodiment and the modification examples thereof, the case in which the present invention is applied to the video conference system has been described as an example, but the present invention is not limited thereto, and is applicable to another speaker system. The present invention can also be applied to an audio system that outputs tune data received from an audio device from the personal speaker 2 or 2a. In this case, it is possible to provide an audio system suitable for listening to music in an environment in which a third party is present in surroundings. Further, in this case, through integration of the personal speaker 2 or 2a with the audio device, the audio device may reproduce tune data downloaded from a media server in accordance with an instruction from the wireless terminal 3 or 3a, and output reproduced data thereof from the plurality of directional speakers 201 that form the speaker array 20.

### Reference Signs List

1: video conference terminal 2, 2a: personal speaker
3, 3a: wireless terminal 4: ceiling 5: desk
20: speaker array 21: inclination adjustment mechanism
22, 30: wireless interface unit 23, 23a: test signal generation unit
24: main control unit 31: man-machine interface unit
32: test instruction unit 33: sound collection unit 34, 34a: test analysis unit
35: off instruction unit 36: main control unit
200: speaker surface 201: directional speaker
202: housing 203: sound beam
210: back surface of housing (surface opposite to speaker surface)
211: ball joint 212: adjuster bolt
240, 240a: switching unit 241: on/off unit

## Claims

1. A speaker system, comprising:
a speaker; and
a wireless terminal configured to function as a controller for the speaker,
wherein the speaker includes:
a plurality of directional speakers arranged in an array on a speaker surface;
generation means for generating pieces of audio data having different frequencies for the respective plurality of directional speakers;
output means for outputting the pieces of audio data generated by the generation means for the respective plurality of directional speakers from corresponding ones of the plurality of directional speakers in accordance with an instruction from the wireless terminal; and
on/off means for controlling, for each of the plurality of directional speakers, on/off of the each of the plurality of directional speakers in accordance with an instruction from the wireless terminal, and
wherein the wireless terminal includes:
instruction means for instructing the speaker to output the pieces of audio data having different frequencies for the respective plurality of directional speakers;
sound collection means for collecting sound of the pieces of audio data output from the plurality of directional speakers at different frequencies for the respective plurality of directional speakers;
analysis means for analyzing volume levels of sound collection signals obtained through sound collection by the sound collection means for the respective frequencies of the pieces of audio data output from the plurality of directional speakers; and
off instruction means for instructing the speaker to turn off one of the plurality of directional speakers that is an output source of one piece of audio data in which the volume level analyzed by the analysis means is lower than a predetermined value or equal to or higher than the predetermined value.

2. A speaker system, comprising:
a speaker; and
a wireless terminal configured to function as a controller for the speaker,
wherein the speaker includes:
a plurality of directional speakers arranged in an array on a speaker surface;
output means for outputting, from the plurality of directional speakers in a predetermined order, pieces of audio data input from outside or internally generated, in accordance with an instruction from the wireless terminal; and
on/off means for controlling, for each of the plurality of directional speakers, on/off of the each of the plurality of directional speakers in accordance with an instruction from the wireless terminal, and
wherein the wireless terminal includes:
instruction means for instructing the speaker to output the pieces of audio data from the plurality of directional speakers in the predetermined order;
sound collection means for collecting sound of the pieces of audio data output from the plurality of directional speakers in the predetermined order;
analysis means for analyzing volume levels of sound collection signals of the respective pieces of audio data output from the plurality of directional speakers in the predetermined order and sequentially obtained through sound collection by the sound collection means; and
off instruction means for instructing the speaker to turn off one of the plurality of directional speakers that is an output source of one piece of audio data in which the volume level analyzed by the analysis means is lower than a predetermined value or equal to or higher than the predetermined value.

3. A speaker, comprising:
a plurality of directional speakers arranged in an array on a speaker surface;
generation means for generating pieces of audio data having different frequencies for the respective plurality of directional speakers;
output means for outputting the pieces of audio data generated by the generation means for the respective plurality of directional speakers from corresponding ones of the plurality of directional speakers in accordance with an instruction from a wireless terminal configured to function as a controller; and
on/off means for controlling, for each of the plurality of directional speakers, on/off of the each of the plurality of directional speakers in accordance with an instruction from the wireless terminal.

4. A speaker, comprising:
a plurality of directional speakers arranged in an array on a speaker surface;
output means for outputting, from the plurality of directional speakers in a predetermined order, pieces of audio data input from outside or internally generated, in accordance with an instruction from a wireless terminal configured to function as a controller; and
on/off means for controlling, for each of the plurality of directional speakers, on/off of the each of the plurality of directional speakers in accordance with an instruction from the wireless terminal.

5. The speaker according to claim 3 or 4, further comprising an angle adjustment mechanism configured to adjust an inclination angle of the speaker surface.

6. A wireless terminal, which is configured to function as a controller for a speaker including a plurality of directional speakers arranged in an array on a speaker surface, the wireless terminal comprising:
instruction means for instructing the speaker to output pieces of audio data having different frequencies for the respective plurality of directional speakers;
sound collection means for collecting sound of the pieces of audio data output from the plurality of directional speakers at different frequencies for the respective plurality of directional speakers;
analysis means for analyzing volume levels of sound collection signals obtained through sound collection by the sound collection means for the respective frequencies of the pieces of audio data output from the plurality of directional speakers; and
off instruction means for instructing the speaker to turn off one of the plurality of directional speakers that is an output source of one piece of audio data in which the volume level analyzed by the analysis means is lower than a predetermined value or equal to or higher than the predetermined value.

7. A wireless terminal, which is configured to function as a controller for a speaker including a plurality of directional speakers arranged in an array on a speaker surface, the wireless terminal comprising:
instruction means for instructing the speaker to output pieces of audio data from the plurality of directional speakers in a predetermined order;
sound collection means for collecting sound of the pieces of audio data output from the plurality of directional speakers in the predetermined order;
analysis means for analyzing volume levels of sound collection signals of the respective pieces of audio data output from the plurality of directional speakers in the predetermined order and sequentially obtained through sound collection by the sound collection means; and
off instruction means for instructing the speaker to turn off one of the plurality of directional speakers that is an output source of one piece of audio data in which the volume level analyzed by the analysis means is lower than a predetermined value or equal to or higher than the predetermined value.

8. A program for causing a computer to function as a controller for a speaker including a plurality of directional speakers arranged in an array on a speaker surface, the program causing the computer to function as:
instruction means for instructing the speaker to output pieces of audio data having different frequencies for the respective plurality of directional speakers;
sound collection means for collecting sound of the pieces of audio data output from the plurality of directional speakers at different frequencies for the respective plurality of directional speakers;
analysis means for analyzing volume levels of sound collection signals obtained through sound collection by the sound collection means for the respective frequencies of the pieces of audio data output from the plurality of directional speakers; and
off instruction means for instructing the speaker to turn off one of the plurality of directional speakers that is an output source of one piece of audio data in which the volume level analyzed by the analysis means is lower than a predetermined value or equal to or higher than the predetermined value.

9. A program for causing a computer to function as a controller for a speaker including a plurality of directional speakers arranged in an array on a speaker surface, the program causing the computer to function as:
instruction means for instructing the speaker to output pieces of audio data from the plurality of directional speakers in a predetermined order;
sound collection means for collecting sound of the pieces of audio data output from the plurality of directional speakers in the predetermined order;
analysis means for analyzing volume levels of sound collection signals of the respective pieces of audio data output from the plurality of directional speakers in the predetermined order and obtained through sound collection by the sound collection means; and
off instruction means for instructing the speaker to turn off one of the plurality of directional speakers that is an output source of one piece of audio data in which the volume level analyzed by the analysis means is lower than a predetermined value or equal to or higher than the predetermined value.
